(19)

Europäisches
Patentamt
European
Patent Office
Office européen
des brevets

(11) **EP 1 681 123 B1**

(12) **EUROPEAN PATENT SPECIFICATION**

(45) Date of publication and mention
of the grant of the patent:
**06.03.2013 Bulletin 2013/10**

(51) Int Cl.:
***B23K 9/10*** (2006.01)

(21) Application number: **06250141.6**

(22) Date of filing: **12.01.2006**

(54) **Arc start control method for AC arc welding**

Verfahren zum Steuern des Lichtbogenzünden eines Wechselstromlichtbogenschweissen.

Procédé de contrôle de l'allumage de l'arc lors d'une opération de soudage à l'arc à courant alternatif.

(84) Designated Contracting States:
**AT CH DE FR GB IT LI**

(30) Priority: **13.01.2005 JP 2005006207**

(43) Date of publication of application:
**19.07.2006 Bulletin 2006/29**

(73) Proprietor: **Daihen Corporation
Osaka-shi, Osaka 532-8512 (JP)**

(72) Inventors:
• **Nishisaka, Futoshi,
c/o Daihen Corporation
Osaka-shi
Osaka 532-8512 (JP)**

• **Tong, Hongjun,
c/o Daihen Corporation
Osaka-shi
Osaka 532-8512 (JP)**

(74) Representative: **Pluckrose, Anthony William
Boult Wade Tennant
Verulam Gardens
70 Gray's Inn Road
London WC1X 8BT (GB)**

(56) References cited:
**EP-A- 0 325 785**

• **DATABASE EPODOC EUROPEAN PATENT OFFICE, THE HAGUE, NL; YAMAGUCHI KOSAKU: "DC pulsed mag welding method and its equipment" XP002430464 & JP 11 138265 A (DAIHEN CORP) 25 May 1999 (1999-05-25)**

**Description**

FIELD OF THE INVENTION

The present invention relates to an arc start control method for improved arc start performance in consumable electrode AC arc welding. JP 11 138 265 A discloses such method.

DESCRIPTION OF THE RELATED ART

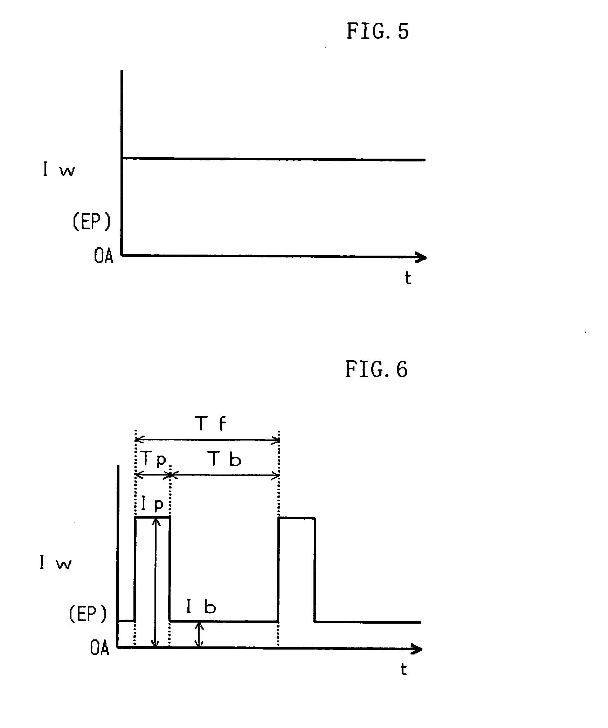

In consumable electrode arc welding, a consumable electrode as a welding wire is supplied to a base material at a predetermined feeding speed. At the same time, a DC or AC welding voltage Vw is applied for causing a welding current Iw to flow between the welding wire and the base material to achieve welding. Depending on the voltage to be applied, the consumable electrode arc welding (hereinafter simply referred to as arc welding) can be categorized into DC arc welding and AC arc welding. Fig. 5 shows a waveform chart of the welding current Iw in DC arc welding. In DC arc welding, normally, welding is made in electrode-positive polarity EP in which the welding wire serves as a positive electrode, while the base material serves as a negative electrode. The figure shows a waveform in a period of arcing in which there is no short circuiting between the welding wire and the base material. Once short circuiting occurs, the welding current Iw increases sharply, thereby terminating the short circuiting condition. In arc welding, it is important to maintain the arc at an appropriate length in order to achieve proper welding. A common method for the arc length control is to control the output of the welding power source so that the welding voltage value Vw will be equal to a predetermined voltage value Vr.

Fig. 6 shows the waveform of a welding current Iw in DC "pulse" arc welding, which is a kind of the DC arc welding. As shown in the figure, a peak current Ip, which has a large current value, is applied during the peak period Tp in order to melt the welding wire into droplets, whereas a base current Ib, which has a small current value, is applied so that no droplets are formed during the base period Tb. One peak period Tp and one base period Tb make up a cycle Tf, and the welding proceeds by repeating this cycle. In DC pulse arc welding, it is also common to use electrode-positive polarity EP, and in this particular type of welding, arc length control is made by controlling the base period Tb and the peak current Ip so that the average value of the welding voltage Vw is equal to a predetermined voltage value Vr. For a welding wire made of an aluminum alloy and having a diameter of 1.2mm, Tp may be 2 ms, Ip may be 320 A, and Ib may be 35 A. The base period Tb, which is determined by the feedback control as mentioned earlier, may be 8 ms for Iw=100 A.

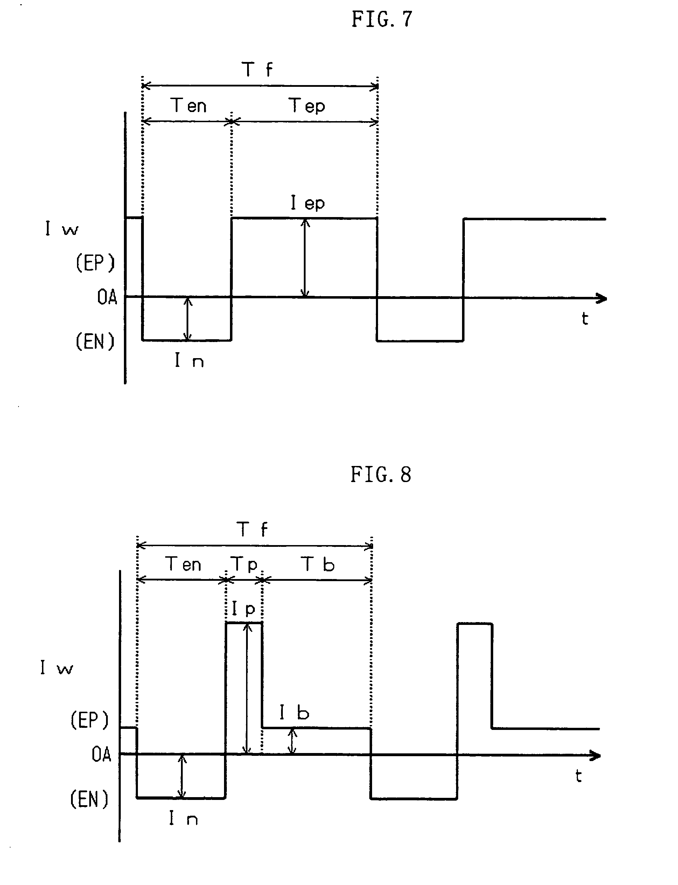

Fig. 7 shows a waveform chart of a welding current Iw in AC arc welding. As shown in the figure, an electrode-negative current In is applied during the electrode-negative period Ten whereas an electrode-positive current Iep is applied during the electrode-positive period Tep. One electrode-negative period Ten and one electrode-positive period Tep make up a cycle Tf, and the welding proceeds by repeating this cycle. In this connection, "Electrode-Negative Time Rate (ENTR)" and "Electrode-Negative Current Rate (ENCR)" are defined in the following formulas.

$$\mathrm{ENTR(\%)=100\times(Ten/Tf).}$$

$$\mathrm{ENCR(\%)=100\times(In\times Ten/(In\times Ten+Iep\times Tep)).}$$

In each formula, the value of the electric current is the absolute value. By the definition, the electrode-negative time rate (ENTR) is the proportion of the electrode-negative period Ten to the period Tf, while the electrode-negative current rate (ENCR) is the proportion of the integrated electrode-negative current value to the current value integrated over the period Tf. It should be noted that the term "electrode-negative rate Rn(%)" used hereinafter refers to the above-defined two values.

In AC arc welding, it is possible to control the melting speed of the welding wire by varying the electrode-negative period Ten, thereby changing the electrode-negative rate Rn. Accordingly, it is possible, in AC arc welding, to reduce the amount of heat input into the base material for forming desired welding beads. This is advantageous to improving the welding quality in conducting thin-plate welding. In this particular type of welding, the arc length is controlled by adjusting the output of the welding power source so that the welding voltage Vw is equal to a preset voltage Vr.

Fig. 8 shows a waveform chart of the welding current Iw in AC pulse arc welding. As shown in the figure, an electrode-negative current In is applied during the electrode-negative period Ten, a peak current Ip is applied during the peak period Tp in electrode-positive polarity EP, and a base current Ib is applied during the base period Tb. One electrode-negative period Ten, one peak period Tp and one base period Tb make up a cycle Tf, and the welding proceeds by repeating this cycle.

In most cases, AC arc welding is pulse arc welding, and the primary field to which AC pulse arc welding is applied is aluminum thin-plate welding, for example. In such an instance, more specifically, the AC pulse arc welding is AC MIG pulse arc welding. In AC pulse arc welding again, it is possible to set the wire melting speed to an appropriate value by adjusting the electrode-negative rate Rn. A common method of adjusting the electrode-negative rate Rn is to vary the electrode-negative period Ten. Arc length control in AC pulse arc welding is made by controlling the base period Tb, peak current Ip, etc., so that the average value of the welding voltage Vw becomes equal to a predetermined voltage value Vr. For a welding wire made of an aluminum alloy and having a diameter of 1.2mm, Tp may be 2 ms, Ip may be 320 A, Ib may be 35 A, Ten may be 3.8 ms and Ien may be 50 A. The base period Tb, which is determined by the feedback control, may be 4 ms for Iw=100 A.

In the AC arc welding described above with reference to Fig. 7 and Fig. 8, the arc is transient and unstable immediately after the arcing begins. Thus, when the polarity changes, it is likely that the arcing does not resume, thereby resulting in arc extinction. Further, since the temperature of the base material remains relatively low immediately after the start of the arcing, it is likely that the weld penetration is shallow, and the resultant beads may unduly bulge, if the welding is conducted with the same electrode-negative rate as that applied for a steady state of welding. In an attempt to improve the welding quality at such an initial arcing stage, prior art technique is proposed in e.g. JP-A-H05-261535, which will be described below.

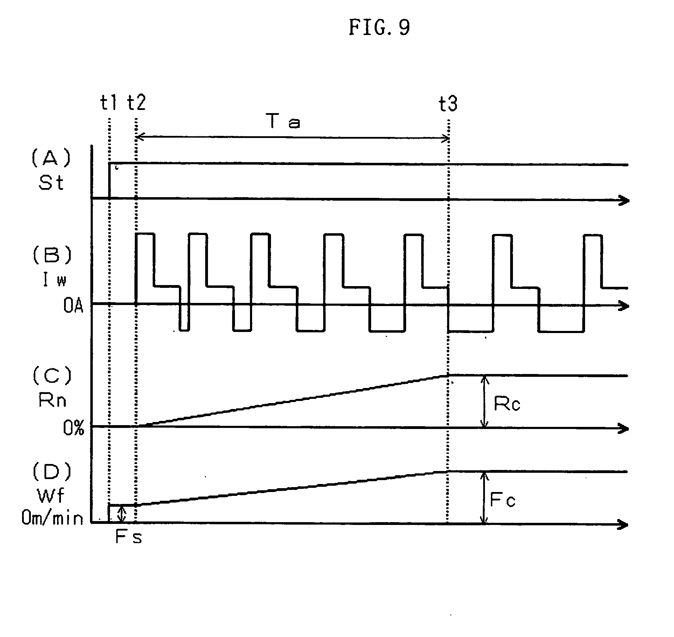

Fig. 9 shows waveform charts (A)-(D) at the initial arcing stage in the AC pulse arc welding disclosed in JP-AH05-261535. Specifically, chart (A) in the figure shows the change of a welding start signal St with time. Likewise, charts (B)-(D) in the figure show the change of a welding current Iw, the change of an electrode-negative rate Rn, and the change of a welding wire feeding speed Wf, respectively.

As shown in chart (A), the welding start signal St becomes HIGH level at time t1, upon which the welding wire is begun to be supplied at a low speed ("slow feeding speed" Fs), as shown in chart (D). As shown in chart (B), the application of the welding current Iw is started to produce an arc at time t2 when the tip of the welding wire reaches the base material. Thereafter, as shown in chart (C), the electrode-negative rate Rn is gradually increased from 0% until a predetermined constant value Rc is attained at time t3. This gradual rise of the rate Rn continues during a predetermined period of time Ta (=t3-t2). Together with the rise of the electrode-negative rate Rn, as shown in chart (D), the feeding speed Wf is increased from the slow feeding speed Fs to a predetermined constant feeding speed Fc.

As shown in chart (B), the welding current Iw starts with an electrode-negative rate Rn=0%, i.e. a pulse current consisting only of electrode-positive polarity EP. Then, the electrode-negative period is caused to become longer. Once time t3 is reached, the steady-state electrode-negative rate Rc and the steady-state feeding speed Fc are attained. The pulse current waveform under this steady condition is shown in Fig. 8.

According to the above-described conventional technique, the electrode-negative rate Rn is increased gradually from a low value to a higher, constant value. In this manner, the initial-stage heat input into the base material can be large. Accordingly, the prior art document alleges that arc extinction at the time of polarity switching can be prevented, and that the state of weld penetration at the initial arcing stage and the state of the beads can be improved.

The conventional technique, however, has the following problems.

(1) Low Operability and Arc Extinction Due to Low Electrode-Negative Rate.
According to the prior art, there is a state in which electrode-negative rate Rn is transitionally very low (several percent). As described above, the electrode-negative rate Rn is adjusted with the length of electrode-negative period. This means that in order to attain a few-percent electrode-negative rate Rn, the electrode-negative period need be very short. However, due to influences from inductance value and resistance value of the electronic current path, the electrode-negative period cannot be shorter than a certain limitation, and therefore it is difficult to achieve a value of a few percent in the electrode-negative rate Rn. Further, with only a 10% or lower electrode-negative rate Rn, the polarity switching must be made from EN to EP immediately after the previous polarity switching has been made from EP to EN. In such an unstable situation where one polarity switching operation is performed immediately after another, arc extinction is likely to occur.
(2) Arc Extinction upon Polarity Switching Due to Low Temperature of Base Material.
When the arching starts with the electrode-negative rate Rn=0%, there is no need for switching the polarity and therefore arc extinction does not occur. After that, however, the electrode-negative rate Rn is nonzero, and the polarity need be changed. Then, arc extinction can occur since the base material has not been sufficiently heated.
(3) Difficulty in Achieving Uniform Weld Penetration and Bead Shape throughout Initial Arching Stage and Steady Welding Stage.

According to the prior art, the weld penetration and the bead shape need be adjusted by optimizing three parameters, i.e. the time period Ta, the rate at which the electrode-negative rate Rn is increased, and the rate at which the feeding speed Wf is increased. The adjustment is a complicated and time-consuming process.

SUMMARY OF THE INVENTION

It is therefore an object of the present invention to provide an arc start control method in AC arc welding, which is suitable for overcoming the above-mentioned problems.

In order to solve the above problems, an arc start control method for AC arc welding is provided according to the present invention. In the AC arc welding to which the method of the present invention is applied, a welding wire is fed at a predetermined steady-state feeding speed, while an AC welding current is applied with two alternating polarities, i.e., electrode-positive polarity and electrode-negative polarity. The arc start control method of the present invention comprises a DC welding step and an AC welding step following the DC welding step. Specifically, in the DC welding step, the welding wire is fed at a predetermined initial feeding speed upon arc start. Meanwhile, DC arc welding is performed during an initial period which may last for hundreds of milliseconds with a DC welding current being applied. This DC welding current has only electrode-positive polarity. Then, in the AC welding step, the above DC welding is switched to AC welding, and the feeding speed of the welding wire is switched from the initial feeding speed to a constant, steady-state feeding speed. This change in feeding speed occurs gradually with an intervening slope having a predetermined inclination.

According to the present invention, the above-mentioned initial feeding speed is determined so that the DC welding current for performing the DC arc welding is substantially equal to the average of the AC welding current for performing the AC arc welding. The initial period (more precisely, the duration of the initial period) is determined so that welding beads formed by the DC arc welding is substantially the same in shape as welding beads formed by the AC arc welding. Regarding the slope, its inclination is set so that it is substantially proportional to the rate of change in welding speed of the welding wire when the DC welding current for the DC arc welding is switched to the AC welding current for the AC arc welding.

Preferably, the DC arc welding may be DC pulse arc welding, and the AC arc welding may be AC pulse arc welding.

Preferably, the inclination of the slope may be determined in accordance with the kind of the welding wire.

According to the method of the present invention, it is possible to overcome problems (1)-(3) discussed above.

Regarding problem (1), the DC arc welding of the present invention is performed during the above-defined initial period, and no polarity change is conducted in this period. Thus, no arc extinction occurs, which would otherwise accompany the polarity switching. Further, during the AC arc welding, following the DC arc welding, the electrode-negative rate Rn can be set to a value appropriate for stabilizing the arc, and this preset value need not be a low electrode-negative rate. Thus, the conventional problem (1) is overcome.

Regarding problem (2), according to the present invention, DC arc welding is performed during the initial period Tdc when the base material temperature is low. In this manner, there is no polarity switching to be made when the base material has not been sufficiently heated up, arc extinction does not occur. Thereafter, the switching to AC arc welding can be performed after the base material temperature has increased sufficiently, and therefore no arc extinction occurs. Thus, the conventional problem (2) is overcome.

Regarding problem (3), according to the present invention, the initial feeding speed Fi is determined so that the DC welding current Idc for the initial period Tdc is equal or substantially equal to the average Iav of the AC welding current. Accordingly, the weld penetration in the arc-start region is equal to the weld penetration in the steady-state region. Further, according to the present invention, only the initial period Tdc is adjusted for making the shape of beads in the arc-start region the same as that in the steady-state region. In this manner, the parameter setting can be performed easily, and the conventional problem (3) is overcome.

BRIEF DESCRIPTION OF THE DRAWINGS

Fig. 1 is a waveform chart showing an arc start control method in AC arc welding according the present invention.
Fig. 2 shows the relationship between the average value of welding current and the feeding speed Wf for different electrode-negative rates Rn.
Fig. 3 is a waveform chart different from Fig. 1, showing the arc start control method in AC arc welding according to the present invention.
Fig. 4 is a block diagram of a welding power source according to the present invention.
Fig. 5 is a waveform chart in a DC arc welding.
Fig. 6 is an electric-current waveform chart in a DC pulse arc welding.
Fig. 7 is an electric-current waveform chart in an AC arc welding.

Fig. 8 is an electric-current waveform chart in an AC pulse arc welding.

Fig. 9 is a waveform chart showing a conventional arc start control method in AC arc welding for describing problems in the prior-art.

DESCRIPTION OF THE PREFERRED EMBODIMENTS

Embodiments of the present invention will now be described below with reference to the accompanying drawings.

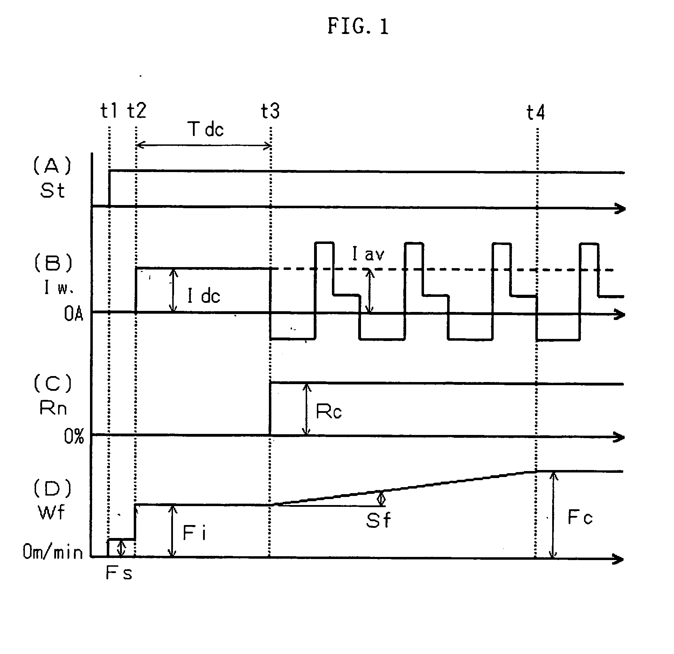

Fig. 1 shows waveform charts depicting an arc start control method in AC arc welding as an embodiment of the present invention. In the figure, chart (A) shows the change of a welding start signal St with time, chart (B) shows the change of a welding current Iw with time, chart (C) shows the change of electrode-negative rate Rn with time, and chart (D) shows the change of welding wire feeding speed Wf with time.

Specifically, as shown in chart (A) in Fig. 1, when the welding start signal St becomes HIGH level at time t1, the welding wire is supplied to the base material at a slow speed, i.e. at a slow feeding speed Fs (see chart (D)). At time t2 when the tip of the welding wire reaches the base material to make contact with it, the welding wire is supplied at an initial feeding speed Fi, as shown in chart (D). Simultaneously, as shown in chart (B), a DC welding current Idc of electrode-positive polarity EP is applied until time t3 is reached, for an initial period Tdc, to perform DC arc welding. The DC welding current Idc has a value determined by the initial feeding speed Fi.

As shown in chart (C), at time t3 upon lapse of the initial period Tdc, the electrode-negative rate Rn is changed to a predetermined steady-state electrode-negative rate Rc. Meanwhile, as shown in chart (B), an AC welding current having a steady-state electrode-negative rate Rc is applied so that DC arc welding is switched to AC arc welding. After this switching, as shown in chart (D), the feeding speed Wf is gradually changed from the initial feeding speed Fi to a predetermined steady-state feeding speed Fc with a predetermined slope Sf (to be described later). At time t4, once the feeding speed Wf has reached the steady-state feeding speed Fc, the welding wire is supplied at this steady-state feeding speed Fc.

(1) How to Determine the Initial Feeding Speed Fi.

To make the penetration in the arc-start region the same or substantially the same as the penetration in the steady-state region, the heat input into the base material should be the same for the two regions. Since heat input from the arc is substantially proportional to the average value of the welding current, this can be achieved by making the value of DC welding current Idc in the initial period Tdc substantially the same as the AC welding current average value Iav.

The DC welding current Idc depends on the initial feeding speed Fi, whereas the AC welding current average value Iav depends on the steady-state feeding speed Fc. When information about the base material, the plate thickness, the joints, etc., is given, the AC welding current average value Iav is determined, and also a corresponding steady-state feeding speed Fc is determined. Further, in accordance with these welding conditions, the steady-state electrode-negative rate Rc is determined.

Then, the DC welding current Idc in the initial period Tdc is set to be the same as the AC welding current average value Iav, and a corresponding initial feeding speed Fi is determined. In this manner, the initial feeding speed Fi is determined so that the DC welding current Idc is substantially the same as the AC welding current average value Iav.

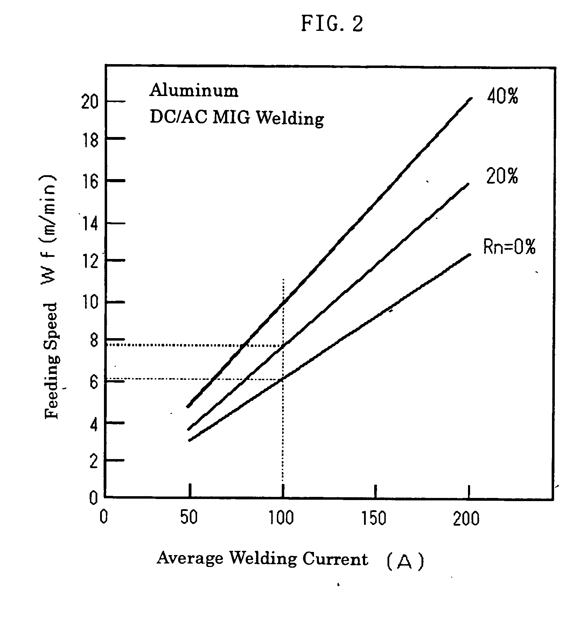

Fig. 2 shows the relationship between the average value of the welding current and the feeding speed Wf when the electrode-negative rate Rn is set to be 0%, 20% and 40%, respectively. Rn=0% means that the welding is DC arc welding. Now, the AC welding current average Iav is set to be 100 A, for example, then the DC welding current Idc is also set to be 100 A. In this instance, if the steady-state feeding speed Fc is set to be 20%, Fig. 2 tells that the steady-state feeding speed Fc is 7.8 m/min (see the graph with Rn=20%), and that the initial feeding speed Fi is 6.1 m/min (see the graph with Rn=0%).

(2) How to Determine the Initial Period Tdc.

The initial period Tdc is determined so as to make the shape of welding beads in the arc-start region substantially the same as in the steady-state region. Since the DC welding current Idc in the initial period Tdc is already determined as described in the above, the shape of welding beads in the arc-start region is adjusted by setting the length of the initial period Tdc. The initial period Tdc is set to have an appropriate duration depending upon the shape of welding beads in the steady-state region, the value being several hundreds milliseconds, ranging from 0.2 s to 0.6 s approximately. The cycle in AC welding current ranges from several milliseconds to ten and several milliseconds, so the initial period Tdc is about several tens times as long as the cycle in AC welding current.

(3) How to Determine the Slope Sf

Switching from the initial feeding speed Fi to the steady-state feeding speed Fc is performed over a predetermined slope Sf. The slope Sf is provided because the welding wire melting speed should gradually change from time t3 when switching is made from DC arc welding to AC arc welding. If the change rate of melting speed is substantially equal to the rate of change of the feeding speed Wf, i.e. the inclination of the slope Sf, it becomes possible to sustain arc stability during the switching. The change rate of melting speed depends on the welding wire material, diameter, etc. For example, when the welding wire is an aluminum alloy having a diameter of 1.2 mm, the change rate of melting speed is approximately 0.5m/min over 100 ms, and so the inclination of the slope Sf should be set to this value. As described above with reference to Fig. 2, when the initial feeding speed Fi=6.1 m/min and the steady-state feeding speed Fc=7.8 m/min, the period of the slope Sf is (7.8-6.1)/0.5=340 ms. An appropriate value for the slope Sf is determined in accordance with the kind of welding wire.

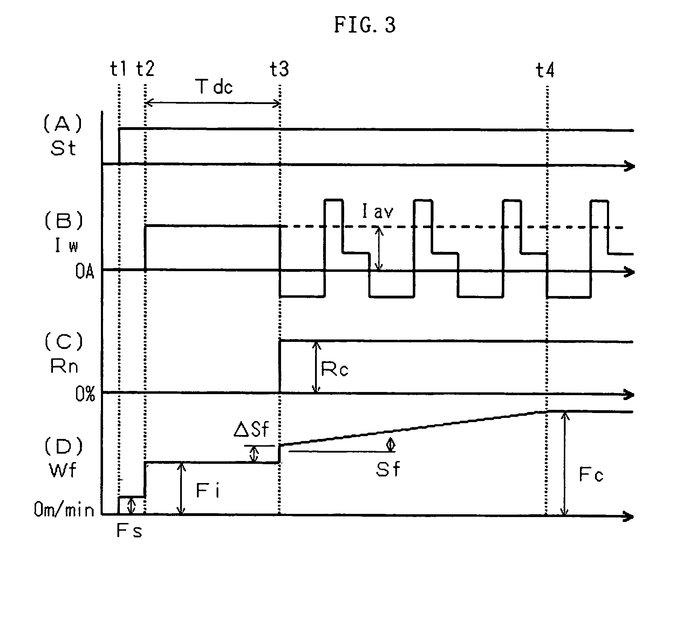

Fig. 3 is a waveform chart which shows another setting for the change pattern of the feeding speed Wf at the time of switchover, which is different from the change pattern described with reference to Fig. 1. In all the charts (A)-(D), each signal is identical with the one in Fig. 1, and the only difference from Fig. 1 is the change pattern shown in chart (D) of the feeding speed Wf during the period between time t3 and time t4. If the difference between the initial feeding speed Fi and the steady-state feeding speed Fc is greater, the slope period between the times t3 and t4 becomes longer since the slope Sf is a predetermined value. By shortening this slope period while sustaining the arc stability, it is possible to achieve a quick transfer from the transition state to the steady-state. For this purpose, as shown in chart (D), the feeding speed Wf is stepped up, to an extent not to destabilize the arc, by ΔSf at time t3 upon ending of the initial period Tdc. Thereafter, the same operation as in Fig. 1 is made, by increasing the feeding speed Wf with the predetermined slope Sf.

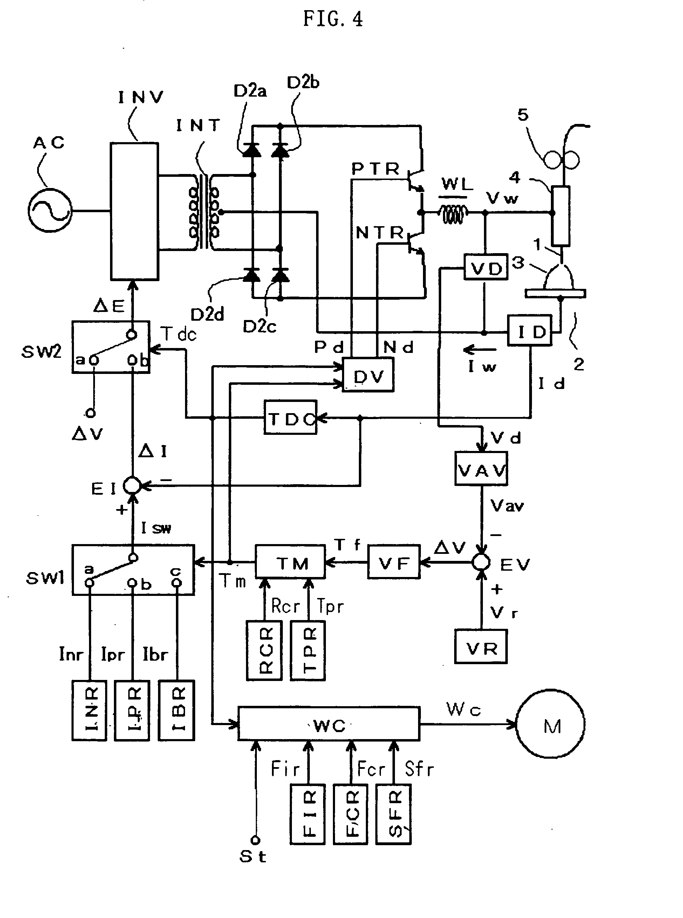

Fig. 4 is a block diagram of a welding power source for performing an arc start control method in AC arc welding according to the embodiment described above.

An inverter circuit INV receives an input from a commercial AC power source (three-phase 200 V, for example), rectifies and smoothens the input into a DC voltage, and outputs a high-frequency AC in accordance with an error amplification signal ΔE to be described later. An inverter transformer INT receives the high-frequency AC, and reduces its voltage to a value appropriate to arc welding. The voltage-adjusted high-frequency AC is then rectified by secondary rectifiers D2a through D2d into a DC. An electrode-positive transistor PTR is turned ON by an electrode-positive polarity drive signal Pd to be described later, causing the welding power source to provide an electrode-positive-polarity output. An electrode-negative transistor NTR is turned ON by an electrode-negative polarity drive signal Nd to be described later, causing the welding power source to provide an electrode-negative-polarity output. A reactor WL smoothens the rectified DC which still has some ripples. A welding wire 1 is supplied by rotation of feeder rollers 5 connected with a wire feeding motor M, through a welding torch 4, to generate an arc 3 between the wire and a base material 2.

A voltage detection circuit VD detects a welding voltage Vw and outputs a voltage detection signal Vd. A voltage averaging circuit VAV averages the voltage detection signal Vd, and outputs a voltage average-value signal Vav. A voltage setting circuit VR outputs a predetermined voltage setting signal Vr. A voltage error amplification circuit EV amplifies an error between the voltage setting signal Vr and the voltage average-value signal Vav, and outputs a voltage error amplification signal ΔV. A V/F converter circuit VF outputs a period signal Tf which has a frequency proportional to ΔV, i.e. the voltage error amplification signal. A steady-state electrode-negative rate setting circuit RCR outputs a predetermined steady-state electrode-negative rate setting signal Rcr. A peak period setting circuit TPR outputs a predetermined peak period setting signal Tpr. Every time the period signal Tf changes, a timer circuit TM outputs a timer signal Tm, which takes a value of one during the electrode-negative period determined by the steady-state electrode-negative rate setting signal Rcr, then takes a value of two during the peak period determined by the peak period setting signal Tpr, and then takes a value of 3 thereafter during the base period.

An electrode-negative-current setting circuit INR outputs an electrode-negative-current setting signal Inr. A peak current setting circuit IPR outputs a peak current setting signal Ipr. A base current setting circuit IBR outputs a base current setting signal Ibr. A first switching circuit SW1 outputs: the electrode-negative-current setting signal Inr as an electric-current-setting switching signal Isw if the timer signal Tm=1; the peak current setting signal Ipr as the electric-current-setting switching signal Isw if the timer signal Tm=2; and the base current setting signal Ibr as the electric-current-setting switching signal Isw if the timer signal Tm=3.

A current detection circuit ID detects the absolute value of the welding current Iw, and outputs a current detection signal Id. An initial-period timer circuit TDC outputs an initial period signal Tdc which takes HIGH level during a predetermined initial period after an arc starts and an electric current has started to flow. A current error amplification circuit EI amplifies the error between the electric-current-setting switching signal Isw and the current detection signal Id, and outputs a current error amplification signal ΔI. A second switching circuit SW2 outputs the voltage error amplification signal ΔV as an error amplification signal ΔE if the initial period signal Tdc is in HIGH level, while it outputs the current error amplification signal ΔI if the signal assumes LOW level.

A secondary-side driving circuit DV outputs: an electrode-positive driving signal Pd if the initial period signal Tdc is in HIGH level; an electrode-negative driving signal Nd if Tdc=LOW level and the timer signal Tm=1; and an electrode-positive driving signal Pd if Tdc=LOW level and Tm=2 or 3.

With the above arrangement, welding is performed in:

electrode-positive polarity during the initial period;
electrode-negative polarity during the electrode-negative period; and electrode-positive polarity during the peak period and the base period.

An initial-period feeding speed setting circuit FIR outputs an initial-period feeding speed setting signal Fir. A steady-state feeding speed setting circuit FCR outputs a steady-state feeding speed setting signal Fcr. A slope setting circuit SFR outputs a slope setting signal Sfr. A feeding control circuit WC outputs a feeding control signal Wc which sets the feeding speed: to a slow feeding speed upon input of the welding start signal St; to a speed determined by the initial-period feeding speed setting signal Fir while the initial period signal Tdc assumes HIGH level; and to a speed determined by the steady-state feeding speed setting signal Fcr for the time thereafter. A wire feeding motor M is controlled with this feeding control signal Wc.

The above description covers a case in which DC arc welding is a DC arc welding described with reference to Fig. 5. The principal, however, is essentially the same for a DC arc welding described with reference to Fig. 6. Likewise, the description covers a case in which AC arc welding is an AC arc welding described with reference to Fig. 8, but the principal is essentially the same for an AC arc welding described with reference to Fig. 7.

## Claims

1. An arc start control method for AC arc welding in which a welding wire (1) is supplied at a predetermined steady-state feeding speed (Fc), and an AC welding current of electrode-positive polarity (EP) and electrode-negative polarity is applied, the method comprising:

   a DC welding step for feeding the welding wire (1) at a predetermined initial feeding speed (Fi) upon arc start and for performing DC arc welding during an initial period (Tdc) of hundreds of milliseconds by applying a DC welding current (Idc) with electrode-positive polarity only; and
   an AC welding step for which the DC arc welding is switched to AC arc welding, and the feeding speed (Wf) of the welding wire is switched from the initial feeding speed (Fi) to the steady-state feeding speed (Fc) with a predetermined slope (Sf);
   wherein the initial feeding speed (Fi) is determined so that the DC welding current for the DC arc welding is substantially equal to the average (Iav) of the AC welding current for the AC arc welding, wherein the initial period (Tdc) is determined so that the shape of welding beads formed by the DC arc welding is substantially the same as the shape of welding beads formed by the AC arc welding, wherein the slope (Sf) is determined so that the inclination of the slope (Sf) is substantially proportional to a rate of change of a wire welding speed upon switching from the DC welding current for the DC arc welding to the AC welding current for the AC arc welding.

2. The arc start control method according to claim 1, wherein the DC arc welding is DC pulse arc welding and the AC arc welding is AC pulse arc welding.

3. The arc start control method according to claim 1 or 2, wherein the inclination of the slope (Sf) is determined in accordance with the kind of the welding wire (1).

## Patentansprüche

1. Verfahren zur Steuerung eines Starts eines Lichtbogens für ein Wechselstrom-Lichtbogenschweißen, wobei ein Schweißdraht (1) mit einer vorherbestimmten konstant bleibenden Zufuhrgeschwindigkeit (Fc) zugeführt wird und ein Wechselstrom-Schweißstrom mit einer Elektroden-positiven Polarität (EP) und einer Elektroden-negativen Polarität angelegt wird, wobei das Verfahren Folgendes umfasst:

   einen Gleichstrom-Schweißschritt, um den Schweißdraht (1) beim Start des Lichtbogens mit einer vorherbestimmten anfänglichen Zufuhrgeschwindigkeit (Fi) zuzuführen, und um während eines anfänglichen Zeitraums (Tdc) von hunderten Millisekunden durch Anlegen eines Gleichstrom-Schweißstroms (Idc) mit nur einer Elektroden-positiven Polarität ein Gleichstrom-Lichtbogenschweißen durchzuführen; und
   einen Wechselstrom-Schweißschritt, für den das Gleichstrom-Lichtbogenschweißen zu einem Wechselstrom-Lichtbogenschweißen umgeschaltet wird und die Zufuhrgeschwindigkeit (Wf) des Schweißdrahts von der anfänglichen Zufuhrgeschwindigkeit (Fi) mit einem vorherbestimmten Anstieg (Sf) zu der konstant bleibenden Zufuhrgeschwindigkeit (Fc) umgeschaltet wird;

wobei die anfängliche Zufuhrgeschwindigkeit (Fi) so bestimmt wird, dass der Gleichstrom-Schweißstrom für das Gleichstrom-Lichtbogenschweißen dem Durchschnitt (Iav) des Wechselstrom-Schweißstroms für das Wechselstrom-Lichtbogenschweißen im Wesentlichen gleich ist, wobei der anfängliche Zeitraum (Tdc) so bestimmt wird, dass die Form der Schweißraupen, die durch das Gleichstrom-Lichtbogenschweißen gebildet werden, im Wesentlichen die gleiche wie die Form der durch das Wechselstrom-Lichtbogenschweißen gebildeten Schweißraupen ist, wobei der Anstieg (Sf) so bestimmt wird, dass die Neigung des Anstiegs (Sf) im Wesentlichen zu einer Veränderungsrate einer Drahtschweißgeschwindigkeit beim Umschalten von dem Gleichstrom-Schweißstrom für das Gleichstrom-Lichtbogenschweißen zu dem Wechselstrom-Schweißstrom für das Wechselstrom-Lichtbogenschweißen proportional ist.

2. Verfahren zur Steuerung eines Starts eines Lichtbogens nach Anspruch 1, wobei das Gleichstrom-Lichtbogenschweißen das Gleichstrom-Impulslichtbogenschweißen ist, und das Wechselstrom-Lichtbogenschweißen das Wechselstrom-Impulslichtbogenschweißen ist.

3. Verfahren zur Steuerung eines Starts eines Lichtbogens nach Anspruch 1 oder 2, wobei die Neigung des Anstiegs (Sf) nach der Art des Schweißdrahts (1) bestimmt wird.

## Revendications

1. Procédé de commande d'amorçage d'arc lors du soudage à l'arc en courant alternatif dans lequel un fil d'apport de soudure (1) est délivré à une vitesse d'alimentation de régime stabilisé prédéterminée (Fc), et un courant de soudage alternatif de polarité d'électrode positive (EP) et de polarité d'électrode négative est appliqué, le procédé comprenant :

une étape de soudage en courant continu afin de délivrer le fil de soudure (1) à une vitesse d'alimentation initiale prédéterminée (Fi) lors de l'amorçage d'arc et de réaliser un soudage à l'arc en courant continu pendant une période initiale (Tdc) de plusieurs centaines de millisecondes en appliquant un courant de soudage continu (Idc) avec uniquement une polarité d'électrode positive ;et

une étape de soudage en courant alternatif dans laquelle le soudage à l'arc en courant continu est basculé pour le soudage à l'arc en courant alternatif, et la vitesse d'alimentation (Wf) du fil de soudure est basculée de la vitesse d'alimentation initiale (Fi) pour la vitesse d'alimentation de régime stabilisé (Fc) avec une pente prédéterminée (Sf) ;

dans lequel la vitesse d'alimentation initiale (Fi) est déterminée de telle sorte que le courant continu de soudage pour le soudage à l'arc en courant continu est sensiblement égal à la moyenne (Iav) du courant alternatif de soudage pour le soudage à l'arc en courant alternatif, dans lequel la période initiale (Tdc) est déterminée de telle sorte que la forme des perles de soudure obtenues par le soudage à l'arc en courant continu est sensiblement identique à la forme des perles de soudure obtenues par le soudage à l'arc en courant alternatif, dans lequel la pente (Sf) est déterminée de telle sorte que l'inclination de la pente (Sf) est sensiblement proportionnelle à un taux de variation d'une vitesse de fil de soudure lors du basculement du courant continu de soudage, destiné au soudage à l'arc en courant continu, au courant alternatif de soudage destiné au soudage à l'arc en courant alternatif.

2. Procédé de commande d'amorçage d'arc selon la revendication 1, dans lequel le soudage à l'arc en courant continu est le soudage à l'arc par impulsion de courant continu et le soudage à l'arc en courant alternatif est le soudage à l'arc par impulsion de courant alternatif.

3. Procédé de commande d'amorçage d'arc selon la revendication 1 ou 2, dans lequel l'inclination de la pente (Sf) est déterminée en fonction du type de fil d'apport de soudure (1).

## FIG. 1

FIG. 2

Aluminum
DC/AC MIG Welding

40%

20%

Rn=0%

Feeding Speed Wf (m/min)

Average Welding Current (A)

FIG. 3

FIG. 4

FIG. 5

FIG. 6

## FIG. 7

## FIG. 8

FIG. 9

**EP 1 681 123 B1**

## REFERENCES CITED IN THE DESCRIPTION

### Patent documents cited in the description

- JP 11138265 A
- JP H05261535 A